Europäisches Patentamt

European Patent Office

Office européen des brevets

(19)

(11) Numéro de publication : **0 187 051**
**B1**

(12) # FASCICULE DE BREVET EUROPÉEN

(45) Date de publication du fascicule du brevet :
**19.07.89**

(51) Int. Cl.⁴ : **F 16 H 5/64**

(21) Numéro de dépôt : **85401805.8**

(22) Date de dépôt : **18.09.85**

(54) Dispositif de régulation à deux domaines de pression.

(30) Priorité : **18.09.84 FR 8414261**

(43) Date de publication de la demande :
**09.07.86 Bulletin 86/28**

(45) Mention de la délivrance du brevet :
**19.07.89 Bulletin 89/29**

(84) Etats contractants désignés :
**BE DE GB IT NL SE**

(56) Documents cités :
**EP--A-- 0 009 749**
**EP--A-- 0 009 758**
**EP--A-- 0 176 431**
**FR--A-- 2 084 771**
**FR--A-- 2 109 792**
**FR--A-- 2 278 021**
**FR--A-- 2 321 640**
**FR--A-- 2 446 424**
**AE-5, Design Practices-Passenger Car Automatic Transmissions, SAE, Warrendale, PA 15096, USA, 1973, R.W. Stapleton: "Variable-Capacity Transmission Pump"**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Leorat, François**
**98, boulevard de la Reine**
**F-78000 Versailles (FR)**
Inventeur : **Coutant, Patrick**
**14, rue Jean Edeline**
**F-92500 Rueil Malmaison (FR)**
Inventeur : **Aubert, Paul**
**71 M, Route du Pavé-Blanc**
**F-92140 Clamart (FR)**

(74) Mandataire : **Chassagnon, Jean-Alain et al**
**REGIE NATIONALE DES USINES RENAULT (S.0804)**
**F-92109 Boulogne-Billancourt Cedex (FR)**

Jouve, 18, rue St-Denis, 75001 Paris, France

## Description

La présente invention se rapporte à un dispositif de régulation à deux domaines de pression comportant un système de régulation de pression associé à une vanne manuelle.

On connaît de nombreux dispositifs de régulation de pression comportant plusieurs vannes, dans des combinaisons plus ou moins complexes, afin d'obtenir plusieurs niveaux de pression. Un tel dispositif est décrit dans EP-A-0 009 758, qui reflète le préambule de la revendication 1.

Le but de la présente invention est de proposer un dispositif relativement simple qui associe une vanne manuelle à un système de régulation de pression afin d'obtenir deux domaines de pression, le deuxième domaine de pression pouvant avoir deux niveaux possibles suivant le réglage adopté.

Selon l'invention, le dispositif de régulation à deux domaines de pression est décrit dans la partie caractérisante de la revendication 1.

Selon un mode de réalisation la variation de la pression de ligne est assurée par une électrovanne modulatrice, qui établit une pression modulée agissant sur une section différentielle de ladite vanne de régulation de pression.

Selon un mode de réalisation de l'invention, le niveau du deuxième domaine de pression de ligne est assuré par l'action de la pression de ligne sur une petite section de la vanne de régulation de pression, et par l'association de deux gicleurs, dont le premier gicleur est obturé, et le deuxième gicleur est ouvert.

Selon un mode de réalisation de l'invention, le niveau du deuxième domaine de pression de ligne est assuré par l'action de la pression de ligne sur une grande section de la vanne de régulation de pression, et par l'association de deux gicleurs, dont le premier gicleur est ouvert, et dont le deuxième gicleur est obturé.

Selon un mode de réalisation de l'invention, le dispositif comprend une vanne de régulation de pression, qui assure une pression dite de référence du fluide hydraulique du circuit, afin d'alimenter l'électrovanne modulatrice.

Selon un mode de réalisation de l'invention, le dispositif comporte des gicleurs qui sont associés en série, afin de déterminer à partir de la première pression de référence, une deuxième pression de référence intermédiaire du fluide hydraulique.

Selon un mode de réalisation de l'invention, la deuxième vanne de régulation de pression comprend un tiroir de régulation additionnel associé à un ressort de rappel qui, à partir de la première pression de référence, crée une pression de référence intermédiaire du fluide hydraulique.

Selon un mode de réalisation de l'invention, il est prévu que l'alimentation d'un circuit secondaire passe par la première vanne de régulation de pression, et que ladite vanne de régulation de pression comporte une portée coupant l'alimentation du circuit secondaire en cas de chute brutale de la pression de ligne, causée par un appel de débit important.

Selon un mode de réalisation de l'invention, le circuit hydraulique est alimenté par une pompe à débit variable, dont le canal de pilotage passe par la première vanne de régulation de pression.

Cette vanne de régulation de pression comporte une portée qui met en communication ledit canal de pilotage, soit avec un canal qui est à la pression de ligne, soit avec la pression zéro, afin d'assurer la régulation de ladite pression de ligne.

Selon un mode de réalisation de l'invention, la première vanne de régulation de pression est munie d'une chambre située entre le zéro et la chambre où agit la pression modulée, ladite chambre recevant un canal de dérivation du canal dans lequel est établi la pression intermédiaire de référence.

L'invention présente ainsi l'avantage d'obtenir de manière simple, par réglage de la tare en place du ressort de la première vanne de régulation de pression, et calibrage, bouchage ou débouchage sélectif de gicleurs, trois plages distinctes de pression de ligne.

D'autres caractéristiques et avantages de la présente invention ressortiront de la description qui suit d'un mode de réalisation particulier, donné à titre d'exemple et nullement limitatif, en référence aux dessins annexés sur lesquels :

— la figure 1 représente le circuit hydraulique du dispositif selon l'invention pour un premier domaine de pression ;

— la figure 2 représente le circuit hydraulique du dispositif selon l'invention pour un deuxième domaine de pression avec un premier niveau ;

— la figure 3 représente le circuit hydraulique du dispositif selon l'invention pour un deuxième domaine de pression avec un deuxième niveau ;

— la figure 4 représente un autre mode de réalisation de la deuxième vanne de régulation de pression.

Le dispositif selon l'invention comprend une vanne manuelle VM permettant l'alimentation d'un circuit principal en fluide hydraulique et constituée par un tiroir 126 à trois positions, dont les deux positions extrêmes sont référencées R et A.

L'ensemble du circuit hydraulique est alimenté au moyen d'une pompe volumétrique 20 à cylindrée variable aspirant le fluide hydraulique à partir d'un bac vu à travers une crépine.

L'ensemble du circuit comporte les différents éléments nécessaires aux différents niveaux de

**EP 0 187 051 B1**

pression qui doivent être régulés pour le fonctionnement du dispositif. Ces différents éléments sont :
— une vanne de régulation de pression VRP, destinée à fournir les différents niveaux de la pression de ligne nécessaires au circuit hydraulique ;
— une vanne de régulation VLP 3.

Tous les éléments de l'ensemble du circuit hydraulique présentent chacun un corps muni de différentes chambres référencées par le numéro de la chambre suivi de la référence de l'élément en question ; par exemple, la chambre 1 de la vanne de régulation de pression VRP sera référencée : « chambre 1 VRP ».

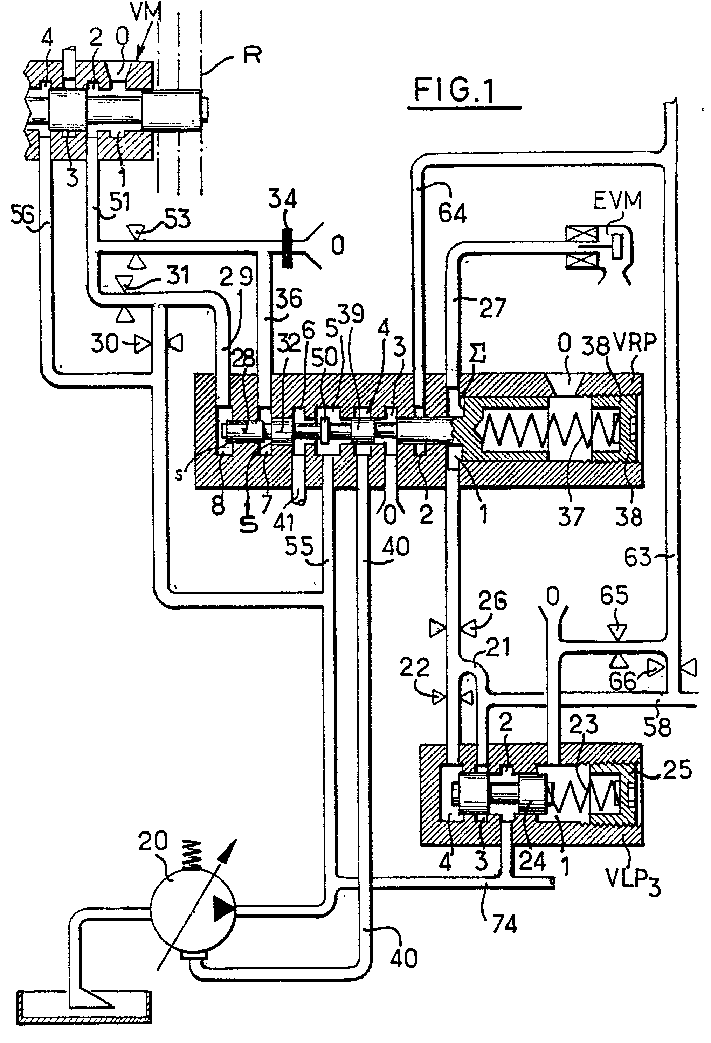

On va, en premier lieu, s'attacher à décrire, en se référant à la figure 1, l'ensemble du système de régulation de pression du fluide hydraulique selon l'invention. Ce système, dans un mode de réalisation préférentiel, est compatible, par la structure de la vanne de régulation de pression VRP, avec une pompe à palettes 20 à cylindrée variable par pilotage de son excentricité. Il faut noter que ce système est adaptable, sans aucun changement de principe, à une pompe classique à cylindrée constante, par une modification mineure de la vanne de régulation de pression VRP évidente pour l'homme de métier.

La vanne de régulation de pression VRP comporte deux tiroirs 32 et 28 délimitant avec le corps de ladite vanne huit chambres référencées respectivement de la droite vers la gauche 1, 2, 3, 4, 5, 6, 7 et 8. Un ressort 37 agit sur le tiroir 2 et s'appuie sur un bouchon fileté 38.

La vanne de régulation de pression VLP 3 comporte un tiroir 24, qui délimite avec le corps de ladite vanne de régulation quatre chambres référencées respectivement de la droite vers la gauche 1, 2, 3 et 4. Un ressort 23 agit sur le tiroir 24 et s'appuie sur un bouchon fileté 25.

La pression de refoulement de la pompe 20 est conduite dans la chambre 2 VLP 3, dont le tiroir 24 est de construction symétrique. La pression régulée, régnant dans le canal 21 débouchant dans la chambre 3 VLP 3, est conduite en contre-réaction sur la chambre VLP 3, à travers le gicleur 22 d'amortissement, équilibrant ainsi la poussée du ressort 23 sur l'autre extrémité du tiroir 24. La pression ainsi régulée, dont la valeur est fixée par la tare en place du ressort 23, qui peut être ajustée grâce au bouchon 25 vissé dans le corps de la vanne VLP 3, donne une pression de référence $P_1$. Le canal 21 est relié, à travers le gicleur calibré 26, à la chambre 1 VRP de la vanne de régulation de pression VRP, où la pression régnant en aval du gicleur 26 agit sur la section différentielle $\Sigma$ de la vanne de régulation de pression VRP ; le canal 27 relie la chambre 1 VRP à l'électrovanne modulatrice EVM. Cette électrovanne EVM, de type normalement ouvert, permet de faire régner dans le canal 27, et donc sur la section différentielle de la vanne VRP, une pression $P_M$ variant entre la pression de référence $P_1$ régnant en amont du gicleur 26 (vanne EVM fermée), et une valeur résiduelle voisine de 0 (vanne EVM ouverte).

Le canal 29 est maintenu à une pression intermédiaire égale à la pression de ligne $P_L$ multipliée par le coefficient réducteur d'un potentiomètre hydraulique constitué par les gicleurs calibrés 30 et 31 en série, interposés entre le canal 55 où règne la pression de ligne $P_L$ et le canal 51 mis au 0 par la vanne manuelle VM.

La pression régnant dans le canal 29 agit, au niveau de la chambre 8 VRP de la vanne VRP, sur le poussoir 28, dont la section s est inférieure à la section S du tiroir 32 de la vanne VRP. Par ailleurs, la chambre 7 VRP de la vanne VRP est au 0 par le canal 36, relié au canal 51 par le gicleur 53, si bien que l'équation de l'ensemble de la vanne VRP s'écrit ;

$$s \cdot \lambda \cdot P_L + \Sigma \cdot P_M = F,$$

où F désigne la force de rappel du ressort 37. On obtient :

$$P_L = F/\lambda \cdot s - (\Sigma/\lambda \cdot s) \, P_M \qquad\qquad (a)$$

Cette expression montre que la pression de refoulement $P_L$, ou pression de ligne, réglable par ajustement de $\lambda$ et de F, évolue en sens inverse de la pression $P_M$, si bien que, en cas de défaillance électrique de la vanne EVM entraînant une pression $P_M$ sensiblement nulle, la pression $P_L$ est alors maximale, de telle sorte que la sauvegarde de la transmission est alors assurée.

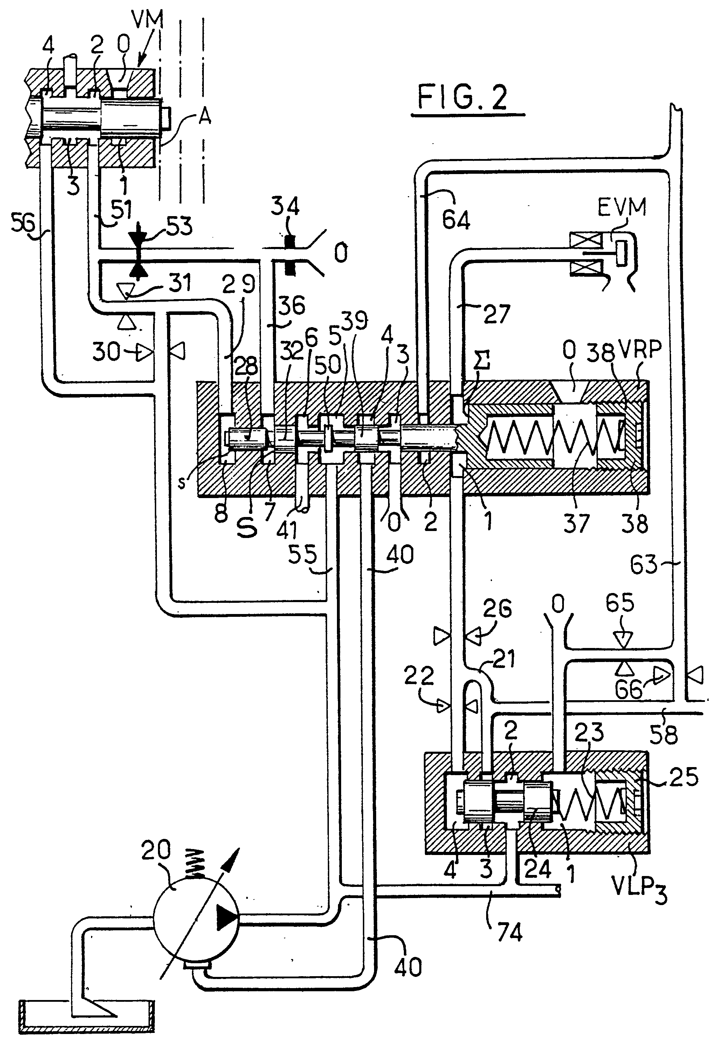

En se référant à la figure 2, on constate que, pour la position A de la vanne manuelle VM, la configuration de l'ensemble de la vanne VRP est analogue à celle qui vient d'être décrite, à ceci près que c'est la pression $P_L$ intégrale, et non plus affectée d'un coefficient diviseur $\lambda$, qui agit sur le poussoir 28. En effet, c'est la pression $P_L$ qui règne dans les canaux 29 et 51, rendant ainsi inopérant le potentiomètre hydraulique constitué par les gicleurs calibrés 30 et 31 ; de plus, le gicleur 53 étant obturé et le gicleur 34 ouvert par une grande section sur le 0, la chambre 7 VRP de la vanne VRP est toujours au 0, si bien que l'équation d'équilibre de la vanne VRP s'écrit, avec les mêmes notations que précédemment :

$$P_L = F/s - (\Sigma/s) \, P_M, \qquad\qquad (b)$$

ce qui montre que la pression $P_L$ est réglable par ajustement de la force F, et varie toujours par mesure de sécurité, en sens inverse de la pression $P_M$.

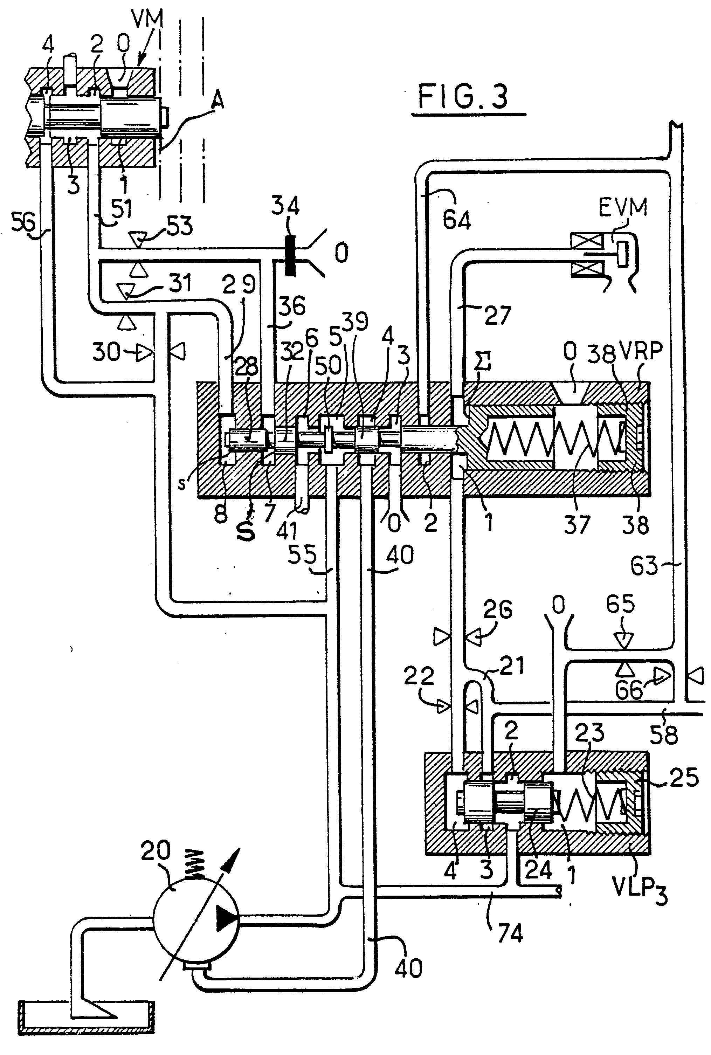

En se référant maintenant à la figure 3, on peut voir que, du fait de l'ouverture du gicleur 53, et de la fermeture de l'orifice de mise à zéro, le poussoir 28 est soumis à la pression de ligne $P_L$ à ses deux

3

extrémités, ce qui neutralise son effet, tandis que la pression $P_L$ agit sur la surface S au niveau de la chambre 7 VRP de la vanne VRP. L'équation d'équilibre de la vanne VRP s'écrit donc :

$$P_L = F/S - (\Sigma/S)\, P_M \tag{c}$$

Cette relation montre que la pression $P_L$ est réglable par ajustement de la force F, et varie toujours, par mesure de sécurité, en sens inverse de la pression $P_M$.

L'ensemble des trois relations (a), (b) et (c) montre que le système de régulation de pression du dispositif selon l'invention permet d'obtenir de manière simple, par réglage de la tare du ressort 37, et par calibrage, bouchage et/ou débouchage sélectif de gicleurs de distribution, trois plages distinctes de pression de ligne permettant de satisfaire à toutes les configurations d'utilisation de la transmission automatique.

Par ailleurs, le pilotage de la pompe à cylindrée variable 20 est réalisé par une portée 39 de la vanne VRP. Cette portée 39 trouve sa position d'équilibre entre les chambres 3 VRP et 4 VRP de la vanne VRP. Lorsque la pression $P_L$ tend à dépasser la valeur de consigne définie par l'une des équations (a), (b), (c) ci-dessus, la vanne VRP a tendance à se déplacer vers la droite sous l'action du poussoir 28, ce qui tend à mettre la chambre 5 VRP de la vanne VRP où règne la pression $P_L$ en liaison avec la chambre 4 VRP, et donc à augmenter la pression de pilotage de la pompe 20 régnant dans le canal 40. Une augmentation de la pression dans le canal 40 fait diminuer la cylindrée de la pompe 20, ce qui provoque une chute de la pression de ligne $P_L$.

Lorsqu'au contraire la pression $P_L$ tend à diminuer, la vanne VRP a tendance à se déplacer vers la gauche sous l'action du ressort 37, ce qui favorise la mise en communication de la chambre 4 VRP avec la chambre 3 VRP elle-même au 0. Il en résulte une chute de la pression régnant dans le canal 40, qui fait augmenter la cylindrée de la pompe 20, ce qui provoque une remontée de la pression de ligne $P_L$.

En outre, un débit de fluide hydraulique sous pression de ligne $P_L$ est transféré au canal 41, en passant de la chambre 5 VRP à la chambre 6 VRP, ce qui permet d'alimenter l'ensemble d'un circuit secondaire d'utilisation.

Par ailleurs, lors d'une forte chute de la pression de ligne $P_L$, due par exemple à un appel de débit important causé par le remplissage d'un récepteur hydraulique, la vanne VRP se déplace vers la gauche sous l'action du ressort 37, ce qui permet à une portée 50 du tiroir 32 de la vanne VRP d'obturer momentanément le passage entre les chambres 5 VRP et 6 VRP. Cette action coupe le débit allant par le canal 41 au circuit secondaire d'utilisation. La diminution de débit entraînée par la coupure momentanée du débit à travers le circuit secondaire d'utilisation permet à la pression de ligne $P_L$ de retrouver plus rapidement sa valeur de consigne, et d'opérer ainsi le remplissage d'un récepteur hydraulique principal dans les meilleures conditions.

La vanne manuelle VM possède un tiroir 126, qui délimite des chambres référencées depuis la droite vers la gauche 1, 2, 3 et 4.

Par ailleurs, le potentiomètre hydraulique, constitué par des gicleurs calibrés 65 et 66, et branché en dérivation entre le canal 58, où règne la pression de référence $P_1$, et le 0, crée dans le canal 63 une pression de référence intermédiaire $P_2$. Cette pression de référence intermédiaire $P_2$ a une valeur sensiblement égale à la moitié de celle de la pression de référence $P_1$.

Par ailleurs, la pression $P_2$ est conduite, par un canal de dérivation 64 du canal 63, dans la chambre 2 VRP, de manière à équilibrer les fuites allant de la chambre 1 VRP, où règne la pression PM, à la chambre 3 VRP, qui est au 0, entre les situations où la pression $P_M$ est égale à $P_1$, et où $P_M$ est sensiblement nulle.

Il convient de noter, au passage, que le débit de fuite du potentiomètre hydraulique constitué par les gicleurs 65 et 66 crée un débit dans le circuit de pression régulée $P_1$, ce qui favorise le fonctionnement en régulation de la vanne de régulation de pression VLP 3.

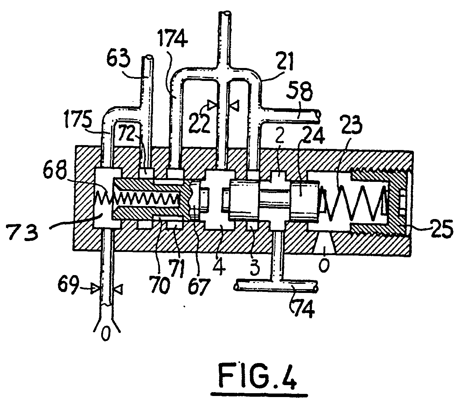

Une disposition alternative de génération de la pression $P_2$ est illustrée par la figure 4. L'alésage de la vanne VLP 3 de section 52 est prolongé de façon qu'il puisse recevoir un tiroir de régulation additionnel 67. Le corps de ce tiroir est creusé de manière à pouvoir y loger un ressort de rappel 68 taré à une force F'. La pression $P_1$, présente dans la chambre 4 VLP 3 maintenant commune à la vanne VLP 3 et au tiroir 67, agit sur l'extrémité droite de ce tiroir 67. Par ailleurs, la pression $P_1$ est conduite par un canal 174, qui débouche dans le canal 21, dans la chambre 71 du tiroir 67. Le diamètre du corps du tiroir 67 est diminué au niveau de la chambre 71, de manière à former un rétrécissement cylindrique 70, créant ainsi, au droit de la chambre 72, une lèvre de régulation permettant de générer dans la chambre 72, et par conséquent dans le canal 63 déjà défini, la pression $P_2$. En effet, la pression $P_2$ est ramenée par le canal 175 dans la chambre 73, si bien que l'équation d'équilibre du tiroir 67 s'écrit :

$$P_2 \cdot S_2 + F' = P_1 \cdot S_2 \text{ soit } P_2 = P_1 - F'/S_2 \tag{d}$$

Enfin, la chambre 73 est reliée au 0 par l'intermédiaire d'un gicleur de faible diamètre 69. Ceci permet de créer un débit de régulation permanent favorable à un bon fonctionnement des tiroirs 24 et 67.

L'ensemble de régulation constitué autour du tiroir 67 se substitue au diviseur de pression constitué par les gicleurs calibrés 65 et 66, et se raccorde au reste du circuit hydraulique par les canaux 21, 58, 63 et 74, déjà mentionnés. Ceci est revendiqué séparément dans la demande EP-A-176 431.

4

**Revendications**

1. Dispositif de régulation comportant une vanne manuelle (VM) associée à une vanne de régulation de pression (VRP), de manière à obtenir un premier domaine de pression de ligne (PL) lorsque la vanne manuelle (VM) se trouve dans une première position R et un deuxième domaine de pression de ligne (PL) lorsque la vanne manuelle se trouve dans une deuxième position A, caractérisé en ce que ledit dispositif comporte deux gicleurs calibrés en série (30) et (31) qui sont disposés sur un canal (51) d'alimentation de la vanne manuelle, appliquant ainsi une pression intermédiaire régnant entre les deux gicleurs en série sur la vanne de régulation de pression (VRP), la vanne manuelle étant en position R et reliant ainsi le canal (51) à l'échappement, appliquant ainsi la pression de ligne (PL) sur la vanne de régulation de pression (VRP), la vanne manuelle étant en position A et le canal (51) étant à la pression de ligne (PL).

2. Dispositif de régulation de pression selon la revendication 1, caractérisé en ce que le niveau du deuxième domaine de pression de ligne ($P_L$) est assuré par l'action de la pression de ligne ($P_L$) sur une petite section s de la vanne de régulation de pression (VRP), le gicleur (53) disposé sur un canal (36) reliant la vanne manuelle (VM) à une deuxième surface d'action (7) de la vanne de régulation de pression (VRP) étant obturé, et l'orifice de mise à zéro (34) étant ouvert.

3. Dispositif de régulation de pression selon la revendication 1, caractérisé en ce que le niveau du deuxième domaine de pression de ligne ($P_L$) est assuré par l'action de la pression de ligne ($P_L$) sur une grande section S de la vanne de régulation de pression (VRP), le gicleur (53) disposé sur un canal (36) reliant la vanne manuelle (VM) à une deuxième surface d'action (7) de la vanne de régulation de pression (VRP) étant ouvert, et l'orifice de mise à zéro (34) étant obturé.

4. Dispositif de régulation de pression selon la revendication 1 caractérisé en ce que la variation de la pression de ligne ($P_L$) est assurée grâce à une électrovanne modulatrice (EVM), qui établit une pression modulée ($P_M$) agissant sur une section différentielle ($\Sigma$) de ladite vanne de régulation de pression (VRP).

5. Dispositif de régulation de pression selon l'une quelconque des revendications précédentes caractérisé en ce qu'il comprend une vanne de régulation de pression (VLP 3) assurant une pression de référence $P_1$ du fluide hydraulique, qui alimente l'électrovanne modulatrice (EVM) et le circuit hydraulique.

6. Dispositif de régulation de pression selon la revendication 5, caractérisé en ce qu'il comporte des gicleurs (66) et (65) en série, qui, à partir de la pression de référence $P_1$, créent une pression de référence intermédiaire $P_2$ du fluide hydraulique.

7. Dispositif de régulation de pression selon la revendication 5, caractérisé en ce que la vanne de régulation de pression (VLP 3) comprend un tiroir de régulation additionnel (67) avec un ressort de rappel (68) qui, à partir de la pression de référence $P_1$, crée une pression de référence intermédiaire $P_2$ du fluide hydraulique.

8. Dispositif de régulation de pression selon l'une des revendications précédentes, caractérisé en ce que l'alimentation d'un circuit secondaire, par un canal (41), passe par la vanne de régulation de pression (VRP), et que ladite vanne de régulation de pression (VRP) comporte une portée (50), qui coupe l'alimentation du circuit secondaire en cas de chute brutale de la pression de ligne $P_L$, par exemple causée par un appel de débit important.

9. Dispositif de régulation de pression selon l'une quelconque des revendications précédentes, caractérisé en ce que l'alimentation du canal (40) du pilotage de la pompe à débit variable (20) passe par la vanne de régulation de pression (VRP) ; et que ladite vanne de régulation de pression (VRP) comporte une portée (39), qui met en communication ledit canal (40) soit avec le canal (55) à la pression de ligne $P_L$, soit à la pression (0), afin d'assurer la régulation de la pression de ligne $P_L$.

10. Dispositif de régulation de pression selon l'une des revendications 6 et 7, caractérisé en ce que la vanne de régulation de pression (VRP) est munie d'une chambre (2 VRP), dans laquelle aboutit un canal de dérivation (64) du canal (63), dans lequel est établie la pression intermédiaire de référence $P_2$.

**Claims**

1. A pressure regulating device comprising a manual valve (VM) associated with a pressure regulating valve (VRP) so as to produce a first range in respect of line pressure ($P_L$) when the manual valve (VM) is in a first position R and a second range in respect of line pressure ($P_L$) when the manual valve is in a second position A, characterised in that said device comprises two jets (30 and 31) which are calibrated in series and which are disposed on a feed duct (51) of the manual valve, thus applying an intermediate pressure obtaining between the two jets in series to the pressure regulating (VRP), the manual valve being in position R and thus connecting the duct (51) to the exhaust, thus applying the line pressure ($P_L$) to the pressure regulating valve (VRP), the manual valve being in position A and the duct (51) being at the line pressure ($P_L$).

2. A pressure regulating device according to claim 1 characterised in that the level of the second line pressure ($P_L$) range is provided by the action of the line pressure ($P_L$) on a small section s of the pressure regulating valve (VRP), the jet (53) disposed on a duct (36) connecting the manual valve (VM) to a second operative surface (7) of the pressure regulating valve (VRP) being closed and the zero-setting orifice (34) being open.

3. A pressure regulating device according to claim 1 characterised in that the level of the second line pressure ($P_L$) range is provided by the action of the line pressure ($P_L$) on a large section S of the pressure regulating valve (VRP), the jet (53) disposed on a duct (36) connecting the manual valve (VM) to a second operative surface (7) of the pressure regulating valve (VRP) being open and the zero-setting orifice (34) being closed.

4. A pressure regulating device according to claim 1 characterised in that the variation in line pressure ($P_L$) is produced by means of an electrically operated modulating valve (EVM) which establishes a modulated pressure ($P_M$) acting on a differential section ($\Sigma$) of said pressure regulating valve (VRP).

5. A pressure regulating device according to any one of the preceding claims characterised in that it comprises a pressure regulating valve (VLP 3) providing a reference pressure ($P_1$) on the hydraulic fluid which feeds the electrically operated modulating valve (EVM) and the hydraulic circuit.

6. A pressure regulating device according to claim 5 characterised in that it comprises jets (66) and (65) in series, which, on the basis of the reference pressure ($P_1$), create an intermediate reference pressure ($P_2$) of the hydraulic fluid.

7. A pressure regulating device according to claim 5 characterised in that the pressure regulating valve (VLP 3) comprises an additional regulating spool (67) with a return spring (68) which, on the basis of the reference pressure ($P_1$), creates an intermediate reference pressure ($P_2$) of a hydraulic fluid.

8. A pressure regulating device according to one of the preceding claims characterised in that the feed for a secondary circuit by way of a duct (41) goes by way of the pressure regulating valve (VRP) and that said pressure regulating valve (VRP) comprises a land (50) which cuts off the feed for the secondary circuit in the event of an abrupt drop in the line pressure ($P_L$) caused for example by a call for a substantial flow rate.

9. A pressure regulating device according to any one of the preceding claims characterised in that the feed for the duct (40) for pilot control of the variable-output pump (20) goes by way of the pressure regulating valve (VRP); and the said pressure regulating valve (VRP) comprises a land (39) which communicates said duct (40) either with the duct (55) at line pressure ($P_L$) or the pressure (0) in order to provide for regulation of the line pressure ($P_L$).

10. A pressure regulating device according to one of claims 6 and 7 characterised in that the pressure regulating valve (VRP) is provided with a chamber (2 VRP) with which there communicates a branch duct (64) from the duct (63), in which the intermediate reference pressure ($P_2$) is established.

## Patentansprüche

1. Druckregelvorrichtung mit einem manuellen Ventil (VM), das einem Druckregelventil (VRP) derart zugeordnet ist, daß ein erster Förderdruckbereich ($P_L$) einstellbar ist, wenn sich das manuelle Ventil in einer ersten Stellung (R) befindet und ein zweiter Förderdruckbereich ($P_L$) einstellbar ist, wenn sich das manuelle Ventil in einer zweiten Stellung (A) befindet, dadurch gekennzeichnet, daß die Vorrichtung zwei in Serie angeordnete kalibrierte Düsen (30 und 31) aufweist, die in einer Zufuhrleitung (51) für das manuelle Ventil angeordnet sind, um so mit einem Zwischendruck, der zwischen den beiden in Serie angeordneten Düsen herrscht, das Druckregelventil (VRP) zu beaufschlagen, wobei das manuelle Ventil in der Stellung (R) ist und dabei die Leitung (51) mit dem Auslaß verbindet und um so mit dem Förderdurck ($P_L$) das Druckregelventil (VRP) zu beaufschlagen, wobei das manuelle Ventil in der Stellung (A) ist und in der Leitung (51) der Förderdruck ($P_L$) herrscht.

2. Druckregelvorrichtung nach Anspruch 1, dadurch gekennzeichnet, daß die Höhe des zweiten Bereiches des Förderdrucks ($P_L$) durch die Wirkung des Förderdrucks ($P_L$) auf einen kleinen Querschnitt (s) des Druckregelventils (VRP) gewährleistet ist, wobei eine Düse (53) in einer Leitung (36) angeordnet ist, die das manuelle Ventil (VM) mit einer zweiten Betätigungsfläche (7) des Druckregelventils (VRP) verbindet, wobei die Düse (53) verschlossen ist und die Rückstellöffnung auf Null (34) geöffnet ist.

3. Druckregelvorrichtung nach Anspruch 1, dadurch gekennzeichnet, daß die Höhe des zweiten Bereiches des Förderdrucks ($P_L$) durch die Wirkung des Förderdrucks ($P_L$) durch die Wirkung des Förderdrucks ($P_L$) auf einen großen Querschnitt (S) des Druckregelventils (VRP) gewährleistet ist, wobei eine Düse (53) in einer Leitung (36) angeordnet ist, die das manuelle Ventil ($V_M$) mit einer zweiten Betätigungsfläche (7) des Druckregelventil (VRP) verbindet, wobei die Düse (53) offen ist und die Rückstellöffnung auf Null (34) verschlossen ist.

4. Druckregelvorrichtung nach Anspruch 1, dadurch gekennzeichnet, daß die Veränderung des Förderdrucks ($P_L$) mittels eines modulierbaren Elektroventils (EVM) erfolgt, das einen modulierten Druck ($P_M$) erzeugt, der auf einen differentiellen Querschnitt ($\Sigma$) des Druckregelventils (VRP) wirkt.

5. Druckregelvorrichtung nach einem der vorhergehenden Ansprüche, dadurch gekennzeichnet, daß sie ein Druckregelventil (VLP 3) aufweist, das einen Bezugsdruck ($P_1$) des hydraulischen Fluids erzeugt, welches das modulierbare Elektroventil (EVM) und den hydraulischen Kreis versogt.

6. Druckregelvorrichtung nach Anspruch 5, dadurch gekennzeichnet, daß sie in Serie angeordnete Düsen (66 und 65) aufweist, die, ausgehend vom Referenzdruck ($P_1$), einen Zwischenreferenzdruck ($P_2$) des hydraulischen Fluids erzeugen.

7. Druckregelvorrichtung nach Anspruch 5, dadurch gekennzeichnet, daß das Druckregelventil (VLP 3) einen zusätzlichen Regelschieber (67) aufweist mit einer Rückholfeder (68), der, ausgehend vom Referenzdruck ($P_1$), einen Zwischen-Referenzdruck ($P_2$) des hydraulischen Fluids erzeugt.

8. Druckregelvorrichtung nach einem der vorhergehenden Ansprüche, dadurch gekennzeichnet, daß die Versorgung eines Sekundärkreises mittels einer Leitung (41) über das Druckregelventil (VRP) erfolgt und daß das Druckregelventil (VRP) ein Teil (50) aufweist, das die Versorgung des Sekundärkreises im Falle eines plötzlichen Abfalles der Förderdrucks (PL) unterbricht, der z. B. durch einen erheblichen Leistungsschub verursacht ist.

9. Druckregelvorrichtung nach einem der vorhergehenden Ansprüche, dadurch gekennzeichnet, daß die Versorgung der Steuerleitung (40) der Pumpe variabler Leistung (20) durch das Druckregelventil (VRP) erfolgt und daß das Druckregelventil (VRP) ein Teil (39) aufweist, das die Leitung (40) entweder mit der Leitung (55) und dem Förderdruck (PL) oder mit dem Druck Null verbindet, um so die Steuerung des Förderdrucks (PL) zu gewährleisten.

10. Druckregelvorrichtung nach einem der Ansprüche 6 und 7, dadurch gekennzeichnet, daß das Druckregelventil (VRP) mit einer Kammer (2 VRP) versehen ist, in der eine Zweigleitung (64) der Leitung (63) mündet und in der der Zwischen-Referenzdruck ($P_2$) herrscht.

EP 0 187 051 B1

FIG.1

FIG.2

FIG.3

## FIG.4